# EUROPÄISCHE PATENTSCHRIFT

(11) **EP 2 539 578 B1**
(45) Veröffentlichungstag und Bekanntmachung des Hinweises auf die Patenterteilung: **24.12.2014**
(21) Anmeldenummer: 11703144.3
(22) Anmeldetag: 02.02.2011
(51) Int. Cl.: F03B 13/18

(54) **WELLENENERGIEANLAGE**
WAVE POWER PLANT
INSTALLATION HOULOMOTRICE

(30) Priorität: 27.02.2010 DE 102010009653
(43) Veröffentlichungstag der Anmeldung: 02.01.2013
(73) Patentinhaber: Robert Bosch GmbH, 70469 Stuttgart (DE)
(72) Erfinder: HAGEMANN, Benjamin, 70839 Gerlingen (DE); SCHARMANN, Nik, 97082 Würzburg (DE)
(74) Vertreter: Thürer, Andreas
(86) Internationale Anmeldenummer: PCT/EP2011/000476
(87) Internationale Veröffentlichungsnummer: WO 2011/103960

(56) Entgegenhaltungen:
- WO-A2-2007/077555
- AU-B2- 627 205
- DE-A1- 2 746 162
- FR-A1- 2 924 768

## Beschreibung

Die Erfindung betrifft eine Anlage zur Umwandlung von Wellenenergie von Gewässern. Es ist eine Vielzahl von derartigen Anlagen im Stand der Technik bekannt. Diese können nach ihrem Einsatzort unterschieden werden, je nachdem, ob sie auf hoher See oder in Küstennähe angeordnet sind. Eine andere Unterscheidung bezieht sich darauf, wie die Energie aus der Wellenbewegung entnommen wird. So sind auf der Wasseroberfläche schwimmende Bojen bzw. Schwimmkörper bekannt, so dass durch deren Heben und Senken beispielsweise ein Lineargenerator angetrieben wird.

Die Druckschriften FR 2 924 768 und AU 627 205 zeigen Wellenenergieanlagen mit jeweils zwei Schwimmkörpern an einer Achse, die quer zur Ausbreitungsrichtung der Welle ausgerichtet wird. Wenn die Wellen darunter hindurch "laufen", ergibt sich eine oszillierende Schwenkbewegung der Achse, deren rotatorische Energie abgegriffen wird.

Aus der Druckschrift DE 27 46 162 ist eine teilweise unter Wasser getauchte Wellenenergieanlage bekannt, die auf flächigen Widerstandelementen basiert, die oszillierende Schwenkbewegungen ausführen. Eine dadurch angetriebene Abtriebswelle führt ebenfalls eine oszillierende Schwenkbewegung aus, deren rotatorische Energie abgegriffen wird.

Bei einem anderen Anlagenkonzept, dem sogenannten "Wave Roller" wird am Meeresboden ein Flügel angebracht, der auf Grund der Bewegung der Wassermoleküle hin und her gekippt wird. Die Bewegungsenergie des Flügels wird in einem Generator beispielsweise in elektrische Energie umgewandelt. Eine Übersicht über Wellenenergiekraftwerke ist in dem Buch "Renewable Energie" von Godfrey Boyle gezeigt.

Den im Stand der Technik bekannten Anlagen ist gemein, dass sie nur einen kleinen Teil der in einer Welle vorhandenen Energie umwandeln können.

Weiterhin ist in der im Jahr 2007 erschienenen Veröffentlichung "A rotating wing for the generation of energy from waves" von Pinkster et al. ein Anlagenkonzept gezeigt, bei dem der Auftrieb eines angeströmten Profils in Rotation umgewandelt wird.

Alle Anlagenkonzepte haben den Nachteil, dass die Geschwindigkeit der erzeugten Drehbewegung oftmals nicht gleichmäßig ist, wodurch der Wirkungsgrad der Anlage suboptimal ist.

Dem gegenüber liegt der Erfindung die Aufgabe zu Grunde, eine Wellenenergieanlage zu schaffen, die einen größeren Wirkungsgrad als die im Stand der Technik bekannten Anlagen aufweist.

Dem gegenüber liegt der Erfindung die Aufgabe zu Grunde, eine Wellenenergieanlage zu schaffen, die einen größeren Wirkungsgrad als die im Stand der Technik bekannten Anlagen aufweist.

Diese Aufgabe wird durch eine Wellenenergieanlage mit den Merkmalen des Patentanspruches 1 gelöst.

Bei der erfindungsgemäßen Wellenenergieanlage zur Umwandlung von Energie einer Wellenbewegung eines Fluids wird von Teilchen des Fluids eine umlaufende Orbitalströmung beschrieben, deren Energie zumindest teilweise in Rotation mindestens einer Kurbelwelle umgewandelt wird. Dabei sind an jeder Kurbelwelle zumindest ein Widerstandselement und zumindest ein Auftriebselement angeordnet. Durch die erfindungsgemäße Kombination dieser prinzipiell unterschiedlichen Kopplungselemente an einer Kurbelwelle werden Unregelmäßigkeiten der Geschwindigkeit der Drehbewegung (z.B. Voreilen des Widerstandselements), die bei Wellenenergieanlage des Standes der Technik vorkommen können, teilweise kompensiert. Somit kann eine Drehbewegung der Kurbelwelle egalisiert bzw. vergleichmäßigt werden. Weiterhin üben die zumindest zwei Kopplungselemente gegenüber nur einem Kopplungselement ein erhöhtes Drehmoment auf die Kurbelwelle aus. Damit ist der Wirkungsgrad bzw. die Energieausbeute der erfindungsgemäßen Wellenenergieanlage verbessert.

An der zumindest einen Kurbelwelle ist vorzugsweise ein Mittel zur Wandlung des Drehmoments in eine andere Energieform vorgesehen.

Bei einem besonders bevorzugten Ausführungsbeispiel ist jede Kurbelwelle im Wesentlichen waagerecht angeordnet und dabei etwa quer bzw. senkrecht zu einer Ausbreitungsrichtung der Welle unter der Oberfläche des Fluids angeordnet. Damit ist der Anströmwinkel der Kopplungselemente durch die etwa einen senkrechten Kreis beschreibenden Orbitalströmung optimiert.

Bei einem besonders bevorzugten Ausführungsbeispiel ist zwischen jedem Kopplungselement und der zugeordneten Kurbelwelle zumindest ein Hebelarm vorgesehen. Damit lassen sich Drehmomente bestimmen, die von den Kopplungselementen an die Kurbelwelle übertragen werden. Weiterhin lässt sich mit Hebelarmen ein Abstand zwischen den verschiedenen Kopplungselementen einer Kurbelwelle herstellen, so dass ihre Anströmung nicht wechselseitig beeinträchtigt wird. Insbesondere bei großen Längserstreckungen der Kopplungselemente ist mit einer Mehrzahl von beabstandeten Hebelarmen eine größere Stabilität der Wellenenergieanlage erreichbar.

Um auf einfache Weise eine hohe mechanische Stabilität der Wellenenergieanlage zu erreichen, kann jedes Kopplungselement über jeweils zwei entlang der Kurbelwelle beabstandete Hebelarme an der zugeordneten Kurbelwelle befestigt sein.

Die Länge der Hebelarme des zumindest einen Widerstandselements und des zumindest einen Auftriebselements kann unabhängig variiert werden. Hierzu sind beispielsweise hydraulische oder elektromotorischen Lösungen denkbar. Wenn die Länge der Hebelarme im Betrieb der Wellenenergieanlage einstellbar ist, ergeben sich insbesondere zwei Vorteile: Einerseits kann die Kreisbahn der Kopplungselemente an unterschiedliche umlaufende Orbitalströmungen angepasst werden um so das übertragene Drehmoment zu maximieren. Alternativ kann über verstellbare Hebelarme das daran befestigte Kopplungselement aus der zugeordneten umlaufenden Orbitalströmung herausbewegt werden um so das vom Kopplungselement an die Kurbelwelle übertragene Drehmoment zu verringern oder die Kurbelwelle sogar abzubremsen. Über ein gezieltes (z.B. ungleichförmiges) Abbremsen kann die Drehbewegung der Kurbelwelle weiter vergleichmäßigt werden.

Zur Erzeugung eines optimalen Auftriebs des Auftriebselements ist gemäß einer ersten besonders bevorzugten Ausführungsvariante ein Flügelprofil vorgesehen.

Die Geometrie des Flügelprofils kann veränderbar sein, um es an unterschiedliche Strömungsbedingungen der Orbitalströmung anzupassen.

Ein Anstellwinkel zwischen Hebelarm und Auftriebselement kann im Betrieb einstellbar sein, um den Anströmwinkel an im Betrieb auftretende unterschiedliche Strömungsrichtungen der Orbitalströmung anzupassen und damit das erzeugte Drehmoment zu optimieren.

Dabei kann der Hebelarm des Auftriebselements um etwa 135 Grad zum Hebelarm des Widerstandselements angestellt sein, und das Auftriebselement kann um etwa 135 Grad zu seinem Hebelarm angestellt sein. Wenn z.B. das Auftriebselement ein Flügelprofil ist, ist also dessen Hauptebene bzw. seine Umströmrichtung um maximal 135 Grad zu seinem Hebelarm angestellt. Damit ist ein ganzheitliches Optimum einerseits aus minimierter wechselseitiger Beeinträchtigung der beiden Kopplungselemente durch maximierten Abstand und andererseits aus maximierter Drehmomententfaltung des Auftriebselements um die Kurbelwelle geschaffen.

Oder der Hebelarm des Auftriebselements kann um etwa 90 Grad zum Hebelarm des Widerstandselements angestellt sein, wobei das Auftriebselement um maximal 180 Grad zu seinem Hebelarm angestellt ist. Damit ist die Drehmomententfaltung des Auftriebselements maximiert. Oder der Hebelarm des Auftriebselements kann um etwa 225 Grad zum Hebelarm des Widerstandselements angestellt sein, wobei das Auftriebselement um maximal 45 Grad zu seinem Hebelarm angestellt ist. Oder der Hebelarm des Auftriebselements kann um etwa 270 Grad zum Hebelarm des Widerstandselements angestellt sein, wobei das Auftriebselement um maximal 0 Grad zu seinem Hebelarm angestellt ist. Damit ist die Drehmomententfaltung des Auftriebselements ebenfalls maximiert. Diese Winkelangaben sind Richtwerte, wobei die realen Werte selbstverständlich auch von den genannten Werten abweichen können. Dabei können die Winkel in der Praxis getestet und so verändert werden, dass ein optimaler Auftrieb erzeugt und damit ein maximales Drehmoment an die Kurbelwelle abgegeben wird.

Zwischen den Hebelarmen des Widerstandselements und des Auftriebselements ist ein Winkel vorgesehen, der verschiedenste Ausprägungen annehmen kann. Bevorzugte Ausführungen sind mit Winkeln von etwa 90°, 135°, 180°, 225° und 270° zwischen den Hebelarmen.

Der jeweilige Winkel zwischen Hebelarm und Auftriebselement wird so gewählt, dass sich für die resultierende Anströmung des Nasenfußpunktes (Überlagerung aus Orbitalströmung und Eigenbewegung durch die Rotation um die Kurbelwelle) ein nahezu optimaler Auftriebsbeiwert in Kombination mit einem maximalen Drehmoment ergibt.

Vorzugsweise kann auch der Winkel zwischen den Hebelarmen der verschiedenen Kopplungskörper im Betrieb variiert werden.

Das Auftriebselement kann alternativ ein Flächenelement sein, das einen Anstellwinkel zur umlaufenden Orbitalströmung des Fluids hat.

Das zumindest eine Widerstandselement kann gemäß einer Ausführungsvariante eine zylindrische Form haben, wobei seine Längsachse etwa parallel zur Kurbelwelle angeordnet ist.

Der Radius des Widerstandselements kann dabei größer als die Länge des bzw. der Hebelarme sein.

Als Widerstandeselement ist eine einseitig gelagerte Platte denkbar, die eben oder konkav oder konvex ausgeführt sein kann.

Bei einer besonders bevorzugten Weiterbildung der erfindungsgemäßen Anlage hat das Widerstandselement einen einstellbaren Strömungswiderstand. Damit können Geschwindigkeitsunterschiede in der Orbitalströmung kompensiert werden. Insbesondere ist unter Umständen ein Unterschied zwischen dem unteren Bereich und dem oberen Bereich der Orbitalströmung gegeben, der mit dieser Weiterbildung ausgeglichen werden können. Somit kann die Drehbewegung der Kurbelwelle weiter vergleichmäßigt werden.

Der von einer Anströmrichtung des Fluids abhängige Strömungswiderstand kann auf einfache Weise durch nicht rotationssymmetrische Widerstandselemente vergleichmäßigt werden. Diese müssen derart am Hebelarm befestigt sein, dass Ihre Orientierung in einem feststehenden Referenzsystem während einer Umdrehung des Rotors stets beibehalten ist. Dies kann vorzugsweise über ein Getriebe erfolgen, wobei z.B. das Widerstandselement und die Kurbelwelle je ein Zahnrad haben, die über ein Zwischenzahnrad miteinander kämmen. Die Übersetzungsverhältnisse sollten hier jeweils 1:1 betragen, um zu einer gleichbleibenden Orientierung zu führen. Alternativ ist beispielsweise auch ein Riementrieb denkbar.

Wenn das Widerstandselement zumindest einen Widerstandskörper mit veränderlichem Volumen hat, das in Abhängigkeit von einer Drehposition der Kurbelwelle und der aktuellen Anströmbedingungen beispielsweise durch Ein- und Auslassen von Wasser einstellbar ist, kann die Drehbewegung der Kurbelwelle auf diese Weise weiter vergleichmäßigt werden.

Wenn eine Dämpfung oder ein Phasenwinkel der Drehbewegung der Kurbelwelle gegenüber der umlaufenden Orbitalströmung einstellbar oder regelbar ist, können alternativ oder in Ergänzung Geschwindigkeitsunterschiede in der Orbitalströmung kompensiert werden.

Zur Drehmomentmaximierung wird die Dämpfung derart geregelt, dass der Phasenwinkel zwischen Anströmrichtung und Hebelarm des Widerstandsläufers zwischen 0 und 180 Grad, vorzugsweise zwischen 75 und 105 Grad, und insbesondere etwa 90 Grad, beträgt.

Bei einem bevorzugten Ausführungsbeispiel werden die Dämpfung und/oder der Phasenwinkel in Abhängigkeit eines Anstellwinkels zwischen einem nicht rotationssymmetrischen drehbaren Widerstandselement bzw. seiner Schnittebene und dem zugeordneten Hebelarm geregelt. Das nicht rotationssymmetrische Widerstandselement übernimmt dabei eine "Wetterfahnenfunktion", bei der sich das Widerstandselement bzw. seine Schnittebene stets parallel zur Anströmrichtung ausrichtet. Damit übernimmt das Widerstandselement gleichzeitig eine sensorische Funktion, wodurch der entsprechende Rotor einfach aufgebaut ist. Die Winkelposition zwischen Hebelarm und nicht rotationssymmetrischem Widerstandselement kann durch entsprechende Sensorik ausgewertet werden und zur Regelung der Anlage genutzt werden.

Das Mittel zur Wandlung des Drehmoments wird von der Kurbelwelle angetrieben und kann eine Hydropumpe sein, in deren Druckmittelvolumenstrom (z.B. mit Hydrauliköl) die gewandelte Energie gespeichert ist. Dieser kann in einem offen oder in einem geschlossenen Kreislauf zu einem Hydromotor strömen, wo.er in Drehenergie gewandelt wird. Weiterhin kann das Mittel zur Wandlung des Drehmoments ein mechanisches Getriebe mit einem Generator sein. Zielenergieformen können unter anderem elektrische Energie, Druck, H₂, Desalination sein.

Dabei kann die Dämpfung und/oder der Phasenwinkel einfach über einen an einem Arbeitsanschluss der Hydropumpe wirkenden Gegendruck geregelt werden.

Oder die Dämpfung und/oder der Phasenwinkel werden über eine schwenkbare Widerstandsfläche geregelt, die ein Bremsmoment an die Kurbelwelle abgibt.

Alternativ kann die Dämpfung und/oder der Phasenwinkel über eine Bremse, vorzugsweise über eine Wirbelstrombremse, geregelt werden.

Alternativ kann die Dämpfung und/oder der Phasenwinkel über Pitchen oder über eine Änderung der Länge des Hebelarms und/oder über eine Einstellung der Geometrie des Flügelprofils und/oder über eine Änderung des Winkels zwischen Hebelarm und Auftriebselement und/oder durch eine Änderung des Winkels zwischen den Hebelarmen geregelt werden, da sich dann das Drehmoment ändert.

Wenn die Wellenenergieanlage mehrere Kurbelwellen mit entsprechenden Kopplungselementen aufweist, die etwa in gleicher Tiefe des Fluids angeordnet und zusammen in einem etwa rahmenförmigen Träger gelagert sind, kann die Leistung der Anlage vervielfacht werden, während ihr fertigungstechnischer Aufwand vergleichsweise gering bleibt.

Je größer dabei die Längserstreckung des rahmenförmigen Trägers ist, und je mehr Kopplungselemente in der Anlage angeordnet sind, desto besser wird die Anlage in ihrer Lage bzw. Position stabilisiert, da die in verschiedenen Richtungen orientierten Kraftkomponenten sich gegenseitig kompensieren. Dies gilt für einen weitgehend biegesteifen Rahmen. Bei Anlagenlängen von größer zwei Wellenlängen wird eine weitgehend ruhende Lage erreicht, an der sich die rotierenden Kopplungselemente sehr gut abstützen können.

Um die Relativposition der Hebelarme und damit auch der Widerstandselemente und der Auftriebselemente zur Anströmrichtung bestimmen zu können, sind im Fluid und/oder auf der Anlage Sensoren zur Bestimmung von Ausbreitungsgeschwindigkeit und Wellenhöhe und vorzugsweise zur Erfassung von lokalen Anströmbedingungen angebracht. Dabei handelt es sich vorzugsweise um Drucksensoren und/oder drehmomentarme Wetterfahnenrotoren und/oder Paare von winklig - insbesondere rechtwinklig - zueinander angeordneten piezoelektrischen Biegewandlern und/oder optische Sensoren beispielsweise mit Lasern. Damit kann eine Steuerung der Wellenenergieanlage in Abhängigkeit der Ausbreitungsgeschwindigkeit und Phasenlage der Welle erfolgen.

Zur Stabilisierung des rahmenförmigen Trägers kann eine horizontale und/oder vertikale Dämpfungsplatte vorgesehen sein. Dadurch sind auch deutlich kleinere Anlagen möglich, die sich nicht über mehrere Wellentäler erstrecken, und die trotzdem stabil im Fluid positioniert sind.

Die Abstände zwischen den Kurbelwellen können einstellbar ausgeführt sein.

Weitere vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine Wellenenergieanlage gemäß einem ersten Ausführungsbeispiel mit einer Welle(nbewegung) in einer Seitenansicht;
Figur 2 ein Auftriebselement gemäß einem zweiten Ausführungsbeispiel in einer schematischen Seitenansicht;
Figur 3 ein Widerstandselement gemäß einem dritten Ausführungsbeispiel in einer Seitenansicht;
Figur 4 ein Widerstandselement gemäß einem vierten Ausführungsbeispiel in einem seitlichen Schnitt;
Figur 5 ein Widerstandselement gemäß einem fünften Ausführungsbeispiel in einem seitlichen Schnitt;
Figur 6 ein Widerstandselement gemäß einem sechsten Ausführungsbeispiel in verschiedenen Zuständen in einem seitlichen Schnitt; und
Figur 7 ein Widerstandselement gemäß einem siebten Ausführungsbeispiel in verschiedenen Zuständen in einem seitlichen Schnitt.

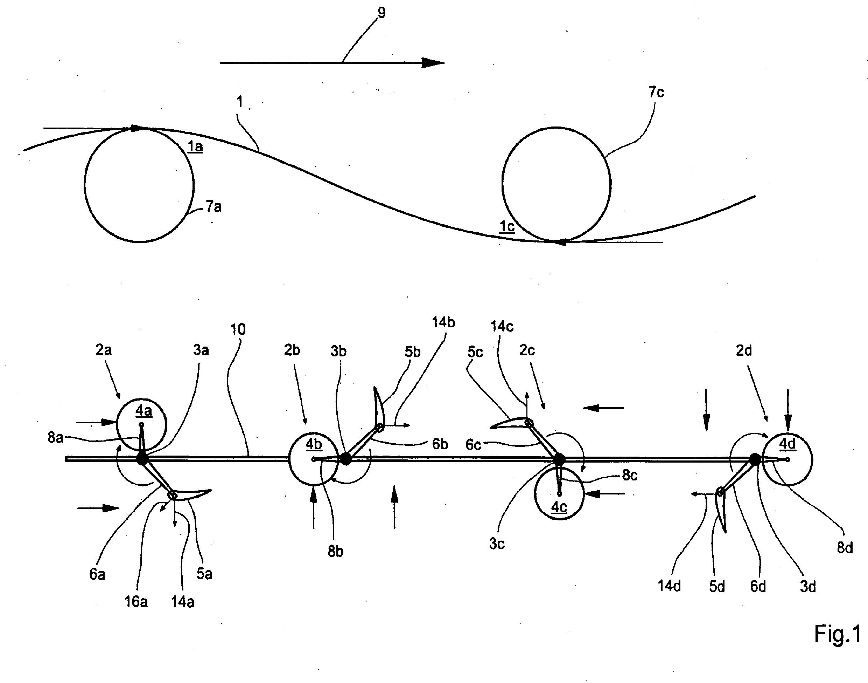

Figur 1 zeigt in einer vereinfachten schematischen Seitenansicht eine Wellenenergieanlage gemäß einem ersten Ausführungsbeispiel. Mit einer derartigen unter der Meerwasseroberfläche 1 angeordneten Wellenenergieanlage ist es möglich, die Wellenenergie besonders effizient zu nutzen. Dies ist in der Bewegung der Wassermoleküle begründet. Wassermoleküle, die sich im Bereich der Welle befinden, bewegen sich auf Grund der Wellenbewegung auf einer so genannten Orbitalbahn 7a, 7c. An folgendem Beispiel wird dies verdeutlicht. An einem bestimmten Ort befindet sich der Wasserspiegel 1 zuerst an einem Maximum (Wellenberg 1a), bevor er sinkt, den Nulldurchgang durchläuft, um anschließend ein Minimum (Wellental 1c) zu erreichen. Anschließend steigt der Wasserspiegel 1 wieder an, durchläuft wiederum den Nulldurchgang, um wieder ein Maximum 1a zu erreichen. Danach beginnt die Bewegung erneut.

Wassermoleküle, die sich an der Wasseroberfläche 1 des Wellenberges 1 a oder unter dem Wellenberg 1 a befinden, bewegen sich in der Ausbreitungsrichtung 9 der Welle, die in Figur 1 als nach rechts gerichtet angenommen ist. Beim anschließenden Nulldurchgang, der in Figur 1 über dem Rotor 2d gezeigt ist, bewegen sich diese Wassermoleküle nach unten, im Wellental 1 c gegen die Ausbreitungsrichtung der Welle nach links und beim darauf folgenden Nulldurchgang nach oben. Es ergibt sich, dass die betroffenen Wassermoleküle sich auf umlaufenden Orbitalbahnen bewegen, von denen in Figur 1 zwei Orbitalbahnen 7a, 7c gezeigt sind. Der Durchmesser dieser Orbitalbahnen ist an der Wasseroberfläche 1 gleich dem Höhenunterschied zwischen Wellental 1c und Wellenberg 1a und nimmt mit zunehmender Wassertiefe ab, wobei ab einer Wassertiefe von der Hälfte der Wellenlänge nahezu keine Orbitalbewegung mehr vorhanden ist. Die Strömungsgeschwindigkeit einer umlaufenden Orbitalströmung ist in ihrem oberen Bereich höher als in ihrem unteren Bereich. In flachem Wasser bewegen sich die Wassermoleküle hingegen nicht mehr auf einer Kreisbahn, sondern auf ellipsenförmigen Bahnen.

Das erste Ausführungsbeispiel der erfindungsgemäßen Wellenenergieanlage hat vier Rotoren 2a, 2b, 2c, 2d, die jeweils eine Kurbelwelle 3a, 3b, 3c, 3d, und als Kopplungselemente je ein Widerstandselement 4a, 4b, 4c, 4d und ein Flügelprofil 5a, 5b, 5c, 5d aufweisen. Beide Kopplungselemente 4a, 4b, 4c, 4d, 5a, 5b, 5c, 5d sind jeweils über zwei Hebelarme an der Kurbelwelle 3a, 3b, 3c, 3d befestigt, wobei nur jeweils ein Hebelarm 6a, 6b, 6c, 6d, 8a, 8b, 8c, 8d dargestellt ist.

Die vier Rotoren 2a, 2b, 2c, 2d sind im Verhältnis zur Welle nur prinzipiell und nicht notwendiger Weise maßstäblich dargestellt.

Die vier Kurbelwellen 3a, 3b, 3c, 3d sind drehbar in einem Rahmen 10 gelagert. Der Rahmen 10 und die Abstände zwischen den Kurbelwellen 3a, 3b, 3c, 3d sind derart ausgelegt, dass bei der in Figur 1 gezeigten Momentanaufnahme der erste Rotor 2a unter einem Wellenberg 1 a, der dritte Rotor 2c unter einem Wellental 1 b und die beiden anderen Rotoren 2b, 2d jeweils unter Übergangsbereichen bzw. Null-Durchgängen der Welle 1 angeordnet sind. Auf Grund der umlaufenden Orbitalströmung 7a, 7c wird der erste Rotor 2a (in Figur 1) von links angeströmt, während der zweite Rotor 2b von unten, der dritte Rotor 2c von rechts und der vierte Rotor 2d von oben angeströmt werden.

Bei dem in Figur 1 gezeigten Ausführungsbeispiel entspricht die Wellenlänge etwa dem Abstand des ersten Rotors 2a vom letzen Rotor 2d. Dies ist vorteilhaft, da sich einige Kraftkomponenten gegenseitig kompensieren, und damit die Lage der Wellenenergieanlage stabilisiert wird. Die Wellenlänge kann aber auch z.B. auf Grund von Wetteränderungen vom Abstand der Rotoren 2a und 2d, abweichen. Insbesondere kann die Anlage auch deutliche kürzer oder länger ausgeführt werden.

Im Folgenden wird beispielhaft die Funktion des Rotors 2a beschrieben, wobei diese Funktionsweise auch für die anderen Rotoren 2b, 2c, 2d gilt. Parallel zur Kurbelwelle 3a ist ein etwa kreiszylinderförmiges Widerstandselement 4a angeordnet, das an seinen beiden stirnseitigen Endabschnitten über jeweils einen Hebelarm an der Kurbelwelle 3a befestigt ist. Von diesen beiden Hebelarmen ist in Figur 1 nur ein Hebelarm 8a gezeigt.

Etwa 135° zu den Hebelarmen 8a sind zwei weitere Hebelarme angeordnet, von denen in Figur 1 wiederum nur ein Hebelarm 6a gezeigt ist. Zwischen diesen Hebelarmen 6a ist ein Auftriebselement angeordnet, das als Flügelprofil 5a ausgebildet ist. Es ist um etwa 135° zu den beiden Hebelarmen 6a angestellt und somit in Figur 1 etwa waagrecht angeordnet. Der Winkel wird von (den dargestellten) 135° ausgehend so eingestellt, dass sich aus Anströmrichtung und Relativbewegung des Auftriebselements eine optimale Anströmung des Auftriebselements ergibt.

Bei einer Anströmung des ersten Rotors 2a (in Figur 1) von links wird das Widerstandselement 4a mit einer Widerstandskraft nach rechts beaufschlagt, so dass diese Widerstandskraft zusammen mit den Hebelarmen 8a ein Drehmoment um die Kurbelwelle 3a erzeugt.

Gleichzeitig wird das Flügelprofil 5a derart angeströmt, dass seine Auftriebskraft 14a (in Figur 1) im Wesentlichen nach unten gerichtet ist. Eine Kraftkomponente 16a der Auftriebskraft 14a, die senkrecht zu den Hebelarmen 6a wirkt, erzeugt zusammen mit diesen Hebelarmen 6a ein Drehmoment um die Kurbelwelle 3a.

Somit wird jeder Rotor 3a-d der erfindungsgemäßen Wellenenergieanlage mit Drehmomenten bzw. Kurbelkräften von zwei prinzipiell unterschiedlichen Kopplungselementen 4a-d bzw. 5a-d angetrieben. Damit wird die Drehbewegung jedes Rotors 2a-d gegenüber Rotoren des Standes der Technik egalisiert bzw. vergleichmäßigt.

Weiterhin ist zur Sicherung der Wellenenergieanlage mindestens eine (nicht gezeigte) Mooringkette vorgesehen, die sich bei der dargestellten Überströmung im (in Figur 1) linken Endabschnitt des Rahmens 10 zum Grund des Meeres erstreckt.

Außerdem hat die erfindungsgemäße Wellenenergieanlage zumindest einen (nicht gezeigten) Schwimmkörper, dessen Auftrieb derart eingestellt oder geregelt wird, dass die Anlage einen neutralen Auftrieb hat. Somit schwebt die Anlage auf einer vorbestimmten Höhe unter der Wasseroberfläche 1.

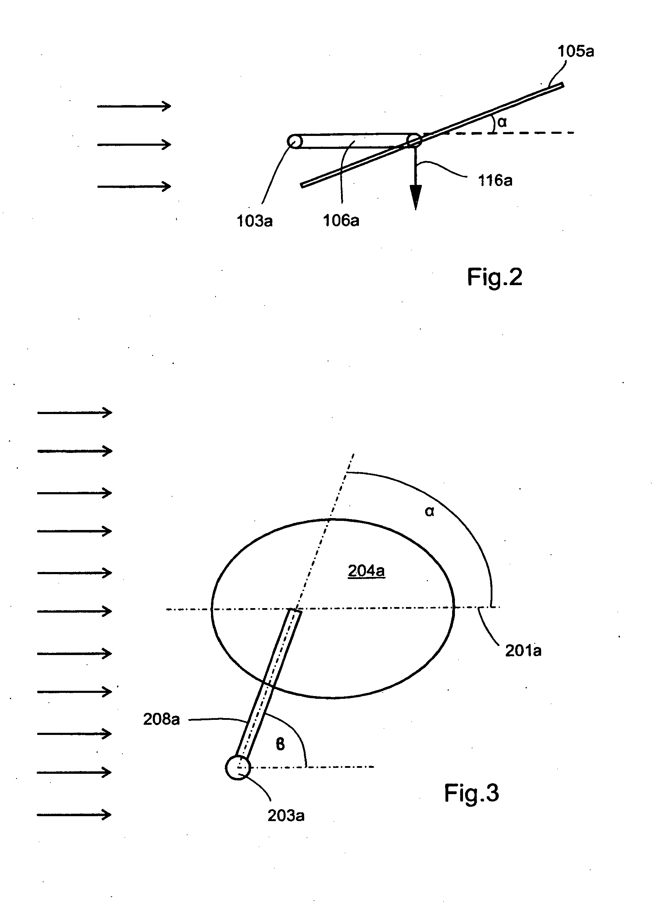

Figur 2 zeigt ein Auftriebselement eines zweiten Ausführungsbeispiels der erfindungsgemäßen Wellenenergieanlage in einer schematischen Seitenansicht. Dabei ist beispielhaft nur ein einziges Auftriebselement gezeigt, das über einen entsprechenden Hebelarm 106a an der zugeordneten Kurbelwelle 103a angeordnet ist. Ein ebenfalls an der Kurbelwelle 103a befestigtes Widerstandselement ist nicht gezeigt. Das Auftriebselement ist als etwa rechteckiges Flächenelement 105a ausgebildet, das um einen veränderbaren oder regelbaren Anstellwinkel a gegenüber den Hebelarmen 106a angestellt ist.

Wenn die Anordnung gemäß Figur 2 in der gezeigten Stellung die Hebelarme 6a und das Flügelprofil 5a des ersten Rotors 2a ersetzt, wird es entsprechend (in Figur 1 und Figur 2) von links angeströmt. Durch den Anstellwinkel a entsteht eine zu den Hebelarmen 106a senkrechte Kraftkomponente 116a, die zusammen mit den Hebelarmen 106a ein Drehmoment um die Kurbelwelle 103a erzeugt.

Figur 3 zeigt ein Widerstandselement 204a gemäß einem dritten Ausführungsbeispiel der erfindungsgemäßen Wellenenergieanlage in einer Seitenansicht. Anders als die Widerstandselemente 4a-d gemäß Figur 1 ist das Widerstandselement 204a gemäß Figur 3 nicht rotationssymmetrisch, sondern hat eine ellipsenzylindrische Form. Es ist drehbar an zwei Hebelarmen gelagert, von denen in Figur 3 nur ein Hebelarm 208a dargestellt ist. Damit ist eine "Wetterfahnenfunktion" des Widerstandselements 204a gegeben, bei der sich eine in Figur 3 waagerechte Schnittebene 201a des Widerstandselements 204a stets entlang der Anströmrichtung ausrichtet und somit um einen Anstellwinkel a gegen die beiden Hebelarme 208a angestellt ist. In der Momentaufnahme der umlaufenden Orbitalströmung gemäß Figur 3 ist die Anströmrichtung von links nach rechts und die Schnittebene 201a dem entsprechend ausrichtet. Der Anstellwinkel a wird erfasst und zur Regelung einer Dämpfung bzw. eines Nachlaufens der Kurbelwelle 203a genutzt. Über die Dämpfung entsteht ein Phasenwinkel ß, um den die Hebelarme 208a gegenüber der Anströmrichtung angestellt sind. Im eingeschwungenen Zustand (gemäß Figur 3) ist a gleich ß.

Der Phasenwinkel ß kann prinzipiell zwischen 0 und 180 Grad liegen. Vorzugsweise wird die Dämpfung der Kurbelwelle 203a derart eingestellt bzw. geregelt, dass 75° < ß < 105° gilt. Optimal ist ein Phasenwinkel ß von 90 Grad, da das vom Widerstandselement 204a an die Kurbelwelle 203a abgegebene Drehmoment optimiert ist.

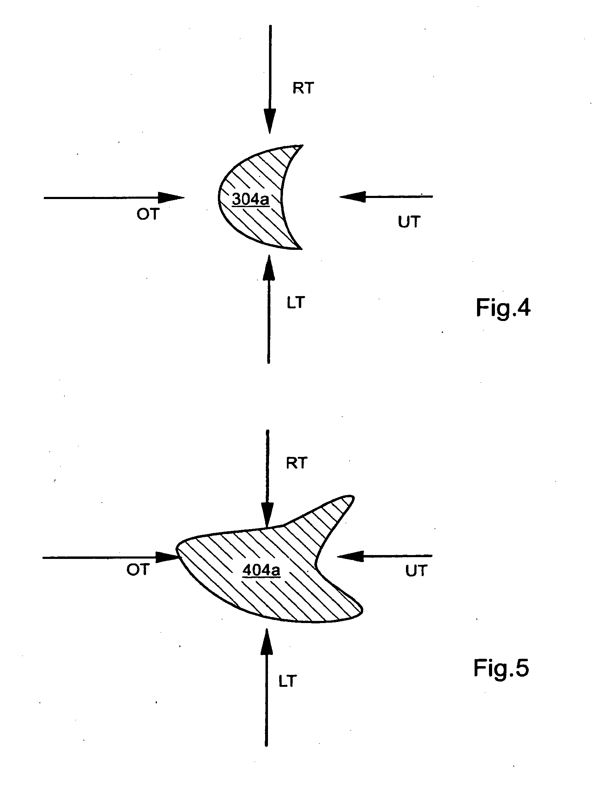

Figur 4 zeigt ein Widerstandselement 304a gemäß einem vierten Ausführungsbeispiel der erfindungsgemäßen Wellenenergieanlage in einem seitlichen Schnitt. Bei diesem Widerstandselement 304a ist die Widerstandskraft (zur Erzeugung eines entsprechenden Drehmoments) abhängig von der Anströmrichtung. Dazu wird das Widerstandselement 304a nicht rotationssymmetrisch ausgebildet und mit den (nicht gezeigten) Hebelarmen derart verbunden, dass die unterschiedlich geformten Oberflächen bei verschiedenen Anströmrichtungen während eines Umlaufs des Widerstandselements 304a um die (nicht gezeigte) Kurbelwelle wirksam sind.

Die (in Figur 4) rechte Seite, die im unteren Totpunkt des Widerstandselements 304a vom Fluid gemäß dem Pfeil UT angeströmt wird, ist konkav ausgebildet und bietet im Vergleich mit den Anströmrichtungen in den anderen Totpunkten RT, LT, OT den höchsten Widerstand. Die (in Figur 4) linke Seite des Widerstandselements 304a ist konvex ausgebildet und bietet bei einer Anströmrichtung am oberen Totpunkt OT im Vergleich zu den anderen Anströmrichtungen RT, LT, UT minimalen Widerstand. Durch eine Achsensymmetrie bieten die obere und die untere Seite einen gleichen Strömungswiderstand, der zwischen den beiden vorgenannten Strömungswiderständen liegt.

Mit dem in Figur 4 gezeigten Widerstandselement 304a können die prinzipiellen Geschwindigkeitsunterschiede einer umlaufenden Orbitalströmung 7a, 7c ausgeglichen werden. Die Wassermoleküle einer umlaufenden Orbitalströmung bewegen sich im Bereich des oberen Totpunktes OT schneller als im Bereich des unteren Totpunktes UT. An den dazwischen liegenden rechten und linken Totpunkten RT, LT liegt auch die Strömungsgeschwindigkeit dazwischen. Die Formgebung des Widerstandselements 304a kompensiert diese Unterschiede und sorgt für eine gleichmäßige Drehmomentübertragung an die (nicht gezeigte) Kurbelwelle.

Figur 5 zeigt ein Widerstandselement 404a gemäß einem fünften Ausführungsbeispiel in einem seitlichen Schnitt. Dabei stellt dieses Widerstandselement 404a eine Weiterentwicklung des Widerstandselements 304a aus Figur 4 dar. Die Formgebung des Widerstandselements 404a dient zusätzlich dazu, Geschwindigkeitsunterschiede zwischen der Strömung am linken Totpunkt LT und der Strömung am rechten Totpunkt RT zu kompensieren. Der Querschnitt des Widerstandselements 404a ist dabei für den Fall ausgelegt, dass die Geschwindigkeit der Strömung am linken Totpunkt LT größer ist als diejenige am rechten Totpunkt RT. Zur Kompensation ist die (in Figur 5) obere Seite des Widerstandselements 404a ansatzweise konkav ausgebildet, während die untere Seite des Widerstandselements 404a konvex ausgebildet ist. Somit ist der Strömungswiderstand des Widerstandselements 404a im rechten Totpunkt des Umlaufs (vgl. Widerstandselement 4d in Figur 1) größer als derjenige im linken Totpunkt des Umlaufs (vgl. Widerstandselement 4b in Figur 1).

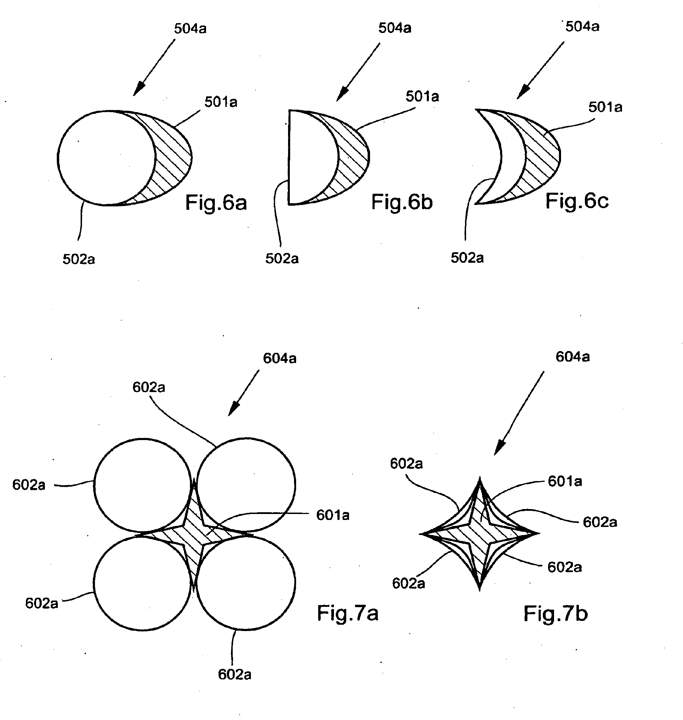

Figuren 6a bis 6c zeigen ein Widerstandselement 504a gemäß einem sechsten Ausführungsbeispiel der erfindungsgemäßen Wellenenergieanlage in drei verschiedenen Zuständen jeweils in einem seitlichen Schnitt. Das Widerstandselement 504a hat einen festen Hauptkörper 501a mit einer (in den Figuren 6a bis 6c) rechts angeordneten konvexen Außenseite. Weiterhin hat der Hauptkörper 501 a eine (in den Figuren 6a bis 6c) konkave Innenseite, an der ein von einem Gummischlauch gebildeter aufblasbarer Widerstandskörper 502a aufgenommen ist.

Figur 6a zeigt den Schlauch 502a in einem mit Meerwasser gefüllten Zustand, während Figur 6c den Schlauch 502a in einem weitgehend entleerten Zustand zeigt. Figur 6b zeigt den Schlauch 502a in einem teilweise mit Meerwasser gefüllten Zustand. Durch die gezeigten unterschiedlichen Füllungsgrade weist das Widerstandselement 504a an seiner (in den Figuren 6a-c) linken Seite eine konvexe (vgl. Figur 6a) oder eine etwa flächige (vgl. Figur 6b) oder eine konkave (vgl. Figur 6c) Oberfläche auf. Darüber hinaus gehend sind auch Zustände zwischen den gezeigten Zuständen möglich. Damit kann derStrömungswiderstand der (in den Figuren 6a-c) linken Seite etwa an demjenigen der rechten Seite angepasst werden oder dem gegenüber erhöht oder dem gegenüber verringert werden. Somit können mit dem Widerstandselement 504a gemäß dem sechsten Ausführungsbeispiel unterschiedliche Drehmomente an die (nicht gezeigte) Kurbelwelle abgegeben werden, insbesondere wenn der Füllungsgrad des Schlauchs 502a in Abhängigkeit von der Umlaufposition des Widerstandselements 504a geregelt wird.

Figuren 7a und 7b zeigen ein Widerstandselement 604a gemäß einem siebten Ausführungsbeispiel in zwei verschiedenen Zuständen in einem seitlichen Schnitt. Das Widerstandselement 604a hat einen festen Hauptkörper 601a, an dem vier gleichmäßig verteilte Ausnehmungen angeordnet sind. In jeder Ausnehmung ist ein Gummischlauch 602a angeordnet, wobei Figur 7a die vier Schläuche 602a in einem komplett mit Meerwasser gefülltem Zustand zeigen, während Figur 7b die vier Schläuche 602a in weitgehend entleertem Zustand zeigt. Auch hier sind stufenlose Zwischenzustände zwischen den beiden gezeigten Zuständen möglich.

Das Widerstandselement 604a gemäß dem siebten Ausführungsbeispiel ermöglicht eine Veränderung des Strömungswiderstandes über einen vergleichsweise weiten Bereich, so dass je nach Befüllungsgrad der vier Schläuche 602a stark voneinander abweichende Drehmomente vom Widerstandselement 604a an die (nicht gezeigte) Kurbelwelle abgegeben werden können. Die vier Schläuche 602a müssen nicht wie dargestellt gleichmäßig befüllt werden, sondern können auch unabhängig voneinander befüllt werden.

Die Dämpfung der Rotoren 2a-d bzw. der Kurbelwellen 3a-d; 103a; 203a aller Ausführungsbeispiele der vorliegenden Erfindung kann über eine regelbare Bremse, insbesondere eine Wirbelstrombremse erfolgen. Wenn die erfindungsgemäße Wellenenergieanlage einen oder mehrere Hydromotoren antreibt, kann die Dämpfung der Kurbelwellen 3a-d; 103a; 203a auch über einen variablen Gegendruck erfolgen, der an einem Ausgangsanschluss des oder der Hydromotoren eingestellt bzw. geregelt wird.

Die Dämpfung der Kurbelwellen 3a-d; 103a; 203a kann auch über eine Triebstrangvariante mit einem mechanischen Getriebe und einem Generator erfolgen. Durch diese Treibstrangvariante wird die Energie der Kurbelwellen 3a-d; 103a; 203a in elektrische Energie gewandelt.

Weiterhin ist zur Dämpfung auch eine (nicht gezeigte) schwenkbare oder drehbare Widerstandsfläche geeignet, die einen Bremswiderstand durch das Wasser erzeugt. Die Steuerung derartiger Dämpfer kann in Abhängigkeit einer Ausbreitungsgeschwindigkeit und einer Phasenlage der Welle erfolgen. Diese können beispielsweise über Drucksensoren oder über zusätzliche drehmomentfreie Wetterfahnenrotoren bestimmt werden. Diese richten sich immer parallel zur Anströmrichtung aus, wodurch diese bestimmt wird. Die Relativpositionen der Wetterfahnenrotoren können mit Hilfe von Beschleunigungssensoren ausgewertet werden. Alternativ kann die momentane Anströmrichtung des Wassers bzw. der umlaufenden Orbitalströmung 7a, 7c auch über zwei winklig, insbesondere rechtwinklig zueinander angeordnete piezoelektrische Biegewandler ermittelt werden. Abweichend davon lässt sich der Phasenwinkel ß auch über eine Variation des jeweiligen Anstellwinkels a des nicht rotationssymmetrischen Widerstandselements 204a; 304a; 404a; 504a und/oder des Auftriebselements 5a-d; 105a regeln. Durch Veränderung dieser Anstellwinkel a kann die Widerstandskraft bzw. Auftriebskraft des entsprechenden Kopplungselements 5a-d, 105a; 204a; 304a; 404a; 504a eingestellt und somit sein abgegebenes Drehmoment geregelt werden.

Alternativ oder in Ergänzung können auch die entsprechenden Hebelarme 6a-d, 8a-d; 106a; 208a in ihrer Länge einstellbar ausgeführt sein. Auch damit lässt sich das vom entsprechenden rotationssymmetrischen oder nicht rotationssymmetrischen Kopplungselement 4a-d, 5a-d; 105a; 204a; 304a; 404a; 504a; 604a abgegebene Drehmoment einstellen bzw. regeln.

Eine Maximierung des von den Auftriebselementen bzw. Flügelprofilen abgegebenen Drehmoments erfolgt über Pitchen oder über einen Änderung der Anstellwinkel der Auftriebselemente.

Abweichend von dem in Figur 1 gezeigten ersten Ausführungsbeispiel können die Hebelarme 6a-d der Flügelprofile 5a-d auch nur um 90 Grad gegenüber den Hebelarmen 8a-d der Widerstandselemente 4a-d angeordnet bzw. angestellt sein. Entsprechend ist der Anstellwinkel der Flügelprofile 5a-d auf einen Wert von etwa 180 Grad vergrößert um eine korrekte Anströmung zu erhalten. Im Betrieb wird dieser so eingestellt, dass sich eine optimale Anströmung des Auftriebselements 5a-d ergibt. Der Abstand der Flügelprofile 5a-d zum Widerstandselement 4a-e ist bei diesem (nicht näher gezeigte) Ausführungsbeispiel verringert, was zu einer leichten Beeinträchtigung der Anströmung der Flügelprofile 5a-e führen kann. Dieser Nachteil könnte aber durch eine effektivere Ausnutzung der Auftriebskraft 14a-e der Flügelprofile 5a-e überkompensiert werden. Statt der verminderten Kraftkomponente 16a, deren Betrag etwa 70% der Auftriebskraft 14a ist (vgl. Figur 1), wird bei diesem (nicht näher gezeigten) Ausführungsbeispiel die gesamte Auftriebskraft 14a zur Drehmomenterzeugung genutzt.

Abweichend von dem in Figur 2 gezeigten zweiten Ausführungsbeispiel können die beiden Hebelarme 106a die Stellung des Hebelarms 6a des ersten Rotors 2a gemäß Figur 1 haben. Entsprechend ist der Anstellwinkel a des Flächenelements 105a gegenüber dem Hebelarm 106a um etwa 45 Grad vergrößert. Dadurch wird der Abstand des Flächenelements 105a zum zugeordneten Widerstandselement 4a vergrößert, was zu einer Verbesserung der Anströmung des Flächenelements 105a führen kann. Entsprechend der in Figur 1 beschriebenen Ausführungsform sind aber auch hier verschiedenen Winkel zwischen den Hebelarmen des Widerstandelements und denen des Flächenelements 105a möglich. Der Anstellwinkel a kann optimal zur Anströmrichtung eingestellt und so das Drehmoment optimiert werden.

Der Rahmen insbesondere gemäß dem ersten bevorzugten Ausführungsbeispiel der Erfindung kann eine Länge von deutlich mehr als 100 m haben. Entscheidend hierbei ist es, die Länge des Rahmens auf die zu erwartende Wellenfrequenz so abzustimmen, dass sie vorzugsweise über zwei Wellenlängen führt. Dadurch kann erreicht werden, dass sich die darauf unmittelbar einwirkenden Kräfte ausgleichen und daher die Wellenenergieanlage relativ ruhig im Wasser liegt. Das Problem hierbei ist jedoch die innere Stabilität der Anlage, die auch extremen Wettereinflüssen wie Stürme standhalten muss. Daher ist die maximale Anlagenlänge begrenzt.

Den Sachverhalt, dass sich die Wassermoleküle nahe der Wasseroberfläche heftiger bewegen als in größeren Wassertiefen, macht sich die Erfindung nunmehr in zweierlei Hinsicht zunutze:
Zum Einen wird der Rahmen in Wassertiefen nahe der Wasseroberfläche gehalten, um auf die Kopplungselemente möglichst hohe äußere Kräfte aufzubringen und damit die Wirtschaftlichkeit der Anlage zu steigern. Zum Anderen kann zur Stabilisierung des Rahmens eine so genannte Dämpfungsplatte zum Einsatz kommen, welche in größere Wassertiefen angeordnet und über eine Kopplungseinrichtung mit dem Rahmen verbunden ist.

Die Dämpfungsplatte erzeugt in einer Wasserströmung einen möglichst hohen Strömungswiderstand. Diese Dämpferplatte wird horizontal und/oder vertikal im Wasser ausgerichtet und bildet somit eine Kraftangriffsfläche für das Wasser. Die Kopplungseinrichtung ist vorzugsweise starr und wird beispielsweise durch vertikal sich erstreckende Säulen gebildet, die an dem Rahmen und an der Dämpferplatte endseitig fixiert sind, um Zug- und Druckkräfte übertragen zu können. Die so mit dem Rahmen verbundene Dämpferplatte, welche sich in großer Wassertiefe angeordnet ist wirkt somit einer Bewegung des Rahmens dämpfend entgegen und hält diesen in Position. Der Rahmen kann somit in seiner Länge reduziert werden.

Offenbart ist eine Wellenenergieanlage zur Umwandlung von Energie einer Wellenbewegung eines Fluids, insbesondere von Meerwasser, in Rotation bzw. Drehenergie. Die Teilchen des Fluids beschreiben unter der Wellenoberfläche eine umlaufende Orbitalströmung, deren Bewegungsenergie zumindest teilweise in Drehenergie einer oder mehrerer Kurbelwellen umgewandt wird. Dabei sind an jeder Kurbelwelle zumindest ein Widerstandselement und zumindest ein Auftriebselement angeordnet, also verschiedenartige Kopplungselemente kombiniert.

### Bezugszeichenliste

- 1: Wasseroberfläche
- 1a: Wellenberg
- 1c: Wellental
- 2a, 2b, 2c, 2d: Rotor
- 3a, 3b, 3c, 3d: Kurbelwelle
- 4a, 4b, 4c, 4d: Widerstandselement
- 5a, 5b, 5c, 5d: Flügelprofil
- 6a, 6b, 6c, 6d: Hebelarm
- 7a, 7c: Orbitalbahn
- 8a, 8b, 8c, 8d: Hebelarm
- 9: Ausbreitungsrichtung
- 10: Rahmen
- 14a, 14b, 14c, 14d: Auftriebskraft
- 16a: Kraftkomponente
- 103a: Kurbelwelle
- 105a: Flächenelement
- 106a: Hebelarm
- 116a: Kraftkomponente
- 201a: Schnittebene
- 203a: Kurbelwelle
- 204a: Widerstandselement
- 208a: Hebelarm
- 304a: Widerstandselement
- 404a: Widerstandselement
- 501a: Hauptkörper
- 502a: Widerstandskörper
- 504a: Widerstandselement
- 601a: Hauptkörper
- 602a: Widerstandskörper
- 604a: Widerstandselement
- a: Anstellwinkel
- ß: Phasenwinkel
- OT: Strömung am oberen Totpunkt
- UT: Strömung am unteren Totpunkt
- LT: Strömung am linken Totpunkt
- RT: Strömung am rechten Totpunkt

## Patentansprüche

1. Wellenenergieanlage zur Umwandlung von Energie einer Wellenbewegung eines Gewässers, wobei von Teilchen des Gewässers unter einer Wellenoberfläche eine umlaufende Orbitalströmung (7a, 7c) beschrieben ist, deren Energie zumindest teilweise über Kopplungselemente (4a, 4b, 4c, 4d, 5a, 5b, 5c, 5d; 105a; 204a; 304a; 404a; 504a; 604a) in Rotation mindestens einer Kurbelwelle (3a, 3b, 3c, 3d; 103a; 203a) umgewandelt ist, **dadurch gekennzeichnet, dass** an der zumindest einen Kurbelwelle (3a, 3b, 3c, 3d; 103a; 203a) zumindest zwei prinzipiell unterschiedliche Kopplungselemente (4a, 4b, 4c, 4d, 5a, 5b, 5c, 5d; 105a; 204a; 304a; 404a; 504a; 604a) angeordnet sind, von denen zumindest ein Kopplungselement ein Widerstandselement (4a, 4b, 4c, 4d; 204a; 304a; 404a; 504a; 604a) und zumindest ein Kopplungselement ein Auftriebselement (5a, 5b, 5c, 5d; 105a) ist.

2. Wellenenergieanlage nach Patentanspruch 1, wobei zwischen jedem Kopplungselement (4a, 4b, 4c, 4d, 5a, 5b, 5c, 5d; 105a; 204a) und der zumindest einen Kurbelwelle (3a, 3b, 3c, 3d; 103a; 203a) zumindest ein Hebelarm (6a, 6b, 6c, 6d, 8a, 8b, 8c, 8d; 106a; 208a) vorgesehen ist.

3. Wellenenergieanlage nach Patentanspruch 2, wobei jeweils zumindest ein Widerstandselement (4a, 4b, 4c, 4d) und zumindest ein Auftriebselement (5a, 5b, 5c, 5d) an der Kurbelwelle (3a, 3b, 3c, 3d) über jeweils zwei entlang der Kurbelwelle (3a, 3b, 3c, 3d) beabstandete Hebelarme (6a, 6b, 6c, 6d, 8a, 8b, 8c, 8d) befestigt sind.

4. Wellenenergieanlage nach Patentanspruch 2 oder 3, wobei eine Länge der Hebelarme (6a, 6b, 6c, 6d, 8a, 8b, 8c, 8d; 106a; 208a) im Betrieb der Wellenenergieanlage einstellbar ist.

5. Wellenenergieanlage nach einem der vorhergehenden Patentansprüche, wobei ein Auftriebselement ein Flügelprofil (5a, 5b, 5c, 5d) ist.

6. Wellenenergieanlage nach Patentanspruch 5, wobei eine Geometrie des Flügelprofils (5a, 5b, 5c, 5d) einstellbar ist.

7. Wellenenergieanlage nach einem der Patentansprüche 2 bis 6, wobei ein Anstellwinkel (α) zwischen Hebelarm (6a, 6b, 6c, 6d; 106a) und Auftriebselement (5a, 5b, 5c, 5d; 105a) im Betrieb einstellbar ist.

8. Wellenenergieanlage nach einem der Patentansprüche 2 bis 7, wobei ein Winkel zwischen Hebelarmen (6a, 6b, 6c, 6d, 8a, 8b, 8c, 8d; 106a; 208a) im Betrieb der Wellenenergieanlage einstellbar ist.

9. Wellenenergieanlage nach einem der vorhergehenden Patentansprüche, wobei ein Auftriebselement ein Flächenelement (105a) ist, das einen Anstellwinkel (α) zur umlaufenden Orbitalströmung des Gewässers hat.

10. Wellenenergieanlage nach einem der vorhergehenden Patentansprüche, wobei ein Widerstandselement (4a, 4b, 4c, 4d; 204a) eine kreiszylindrische oder ellipsenzylindrische Form hat, und wobei seine Längsachse etwa parallel zur Kurbelwelle (3a, 3b, 3c, 3d; 203a) angeordnet ist.

11. Wellenenergieanlage nach einem der vorhergehenden Patentansprüche, mit einem flächigen Widerstandselement, wobei eine Fläche eben oder konvex oder konkav gekrümmt ist.

12. Wellenenergieanlage nach einem der vorhergehenden Patentansprüche, wobei das Widerstandselement (504a; 604a) einen einstellbaren Strömungswiderstand hat.

13. Wellenenergieanlage nach einem der Patentansprüche 2 bis 12, wobei das Widerstandselement (304a; 404a; 504a) nicht rotationssymmetrisch ist und derart am Hebelarm (208a) befestigt ist, dass seine Orientierung in einem festen Referenzkoordinatensystem stets beibehalten ist.

14. Wellenenergieanlage nach Patentanspruch 13, wobei das Widerstandselement (304a; 404a; 504a) über ein Getriebe oder einen Riementrieb mit der Kurbelwelle gekoppelt ist.

15. Wellenenergieanlage nach einem der Patentansprüche 12 bis 14, wobei das Widerstandselement (504a; 604a) zumindest einen Widerstandskörper (502a; 602a) mit veränderlichem Volumen hat, das in Abhängigkeit von einer Drehposition der Kurbelwelle und der aktuellen Anströmbedingungen beispielsweise durch Ein- und Auslassen von Wasser einstellbar ist.

16. Wellenenergieanlage nach einem der vorhergehenden Patentansprüche, wobei eine Dämpfung oder ein Phasenwinkel (β) zwischen dem mindestens einen Hebelarm des Widerstandselements und der umlaufenden Orbitalströmung einstellbar oder regelbar ist.

17. Wellenenergieanlage nach Patentanspruch 16, wobei die Dämpfung derart geregelt ist, dass der Phasenwinkel (β) zwischen 75 und 105 Grad, insbesondere etwa 90 Grad beträgt.

18. Wellenenergieanlage nach Patentanspruch 16 oder 17, wobei ein Anstellwinkel (α) zwischen einem nicht rotationssymmetrischen drehbaren Widerstandselement (204a) und dem zugeordneten Hebelarm (208a) erfassbar ist, in dessen Abhängigkeit die Dämpfung und/oder der Phasenwinkel (β) regelbar ist.

19. Wellenenergieanlage nach einem der Patentansprüche 2 bis 18, wobei ein Mittel zur Wandlung des Drehmoments in eine andere Energieform eine Hydropumpe oder ein Getriebe mit einem elektrischen Generator ist, wobei das Mittel zur Wandlung des Drehmoments von der Kurbelwelle (3a, 3b, 3c, 3d; 103a; 203a) antreibbar ist.

20. Wellenenergieanlage nach Patentanspruch 19, wobei die Dämpfung und/oder der Phasenwinkel (β) über einen an einem Arbeitsanschluss der Hydropumpe wirkenden Gegendruck und/ oder durch ein Drehmoment am Generator geregelt ist.

21. Wellenenergieanlage nach einem der Patentansprüche 16 bis 18, wobei die Dämpfung und/oder der Phasenwinkel (β) über eine schwenkbare oder drehbare Widerstandsfläche oder über eine Bremse, insbesondere Wirbelstrombremse, geregelt ist.

22. Wellenenergieanlage nach einem der Patentansprüche 16 bis 18, wobei die Dämpfung und/oder der Phasenwinkel (β) über Pitchen und/oder über eine Änderung der Länge des Hebelarms (6a, 6b, 6c, 6d, 8a, 8b, 8c, 8d; 106a; 208a) und/oder über eine Einstellung der Geometrie des Flügelprofils (5a, 5b, 5c, 5d) und/oder über eine Änderung des Winkels zwischen Hebelarm (6a, 6b, 6c, 6d; 106a) und Auftriebselement (5a, 5b, 5c, 5d; 105a) und/oder durch eine Änderung des Winkels zwischen den Hebelarmen (6a, 6b, 6c, 6d, 8a, 8b, 8c, 8d; 106a; 208a) geregelt ist.

23. Wellenenergieanlage nach einem der vorhergehenden Patentansprüche, mit mehreren Kurbelwellen (3a, 3b, 3c, 3d), die etwa in gleicher Tiefe des Gewässers angeordnet und zusammen in einem etwa rahmenförmigen Träger (10) gelagert sind.

24. Wellenenergieanlage nach Patentanspruch 23, wobei sich der Träger (10) über mehrere Wellenberge (1a) und/oder über mehrere Wellentäler (1c) erstreckt.

25. Wellenenergieanlage nach einem der vorhergehenden Patentansprüche, wobei im Gewässer Drucksensoren und/oder drehmomentarme Wetterfahnenrotoren und/oder Paare von winklig zueinander angeordneten piezoelektrischen Biegewandlern oder optische Sensoren, insbesondere mit einem Laser, vorgesehen sind.

26. Wellenenergieanlage nach einem der Patentansprüche 23 bis 25, wobei am Träger (10) eine horizontale und/oder vertikale Dämpfungsplatte vorgesehen ist.

## Claims

1. Wave power plant for converting energy from a wave motion in a body of water, in which a circulating orbital motion (7a, 7c) is described by particles of the body of water under a wave surface, the energy of which motion is converted at least partially into rotation of at least one crankshaft (3a, 3b, 3c, 3d; 103a; 203a) by means of coupling elements (4a, 4b, 4c, 4d, 5a, 5b, 5c, 5d; 105a; 204a; 304a; 404a; 504a; 604a), **characterized in that** at least two coupling elements (4a, 4b, 4c, 4d, 5a, 5b, 5c, 5d; 105a; 204a; 304a; 404a; 504a; 604a) which are different in principle are arranged on the at least one crankshaft (3a, 3b, 3c, 3d; 103a; 203a), of which coupling elements at least one coupling element is a resistance element (4a, 4b, 4c, 4d; 204a; 304a; 404a; 504a; 604a) and at least one coupling element is a lift element (5a, 5b, 5c, 5d; 105a).

2. Wave power plant according to Patent Claim 1, wherein at least one lever arm (6a, 6b, 6c, 6d, 8a, 8b, 8c, 8d; 106a; 208a) is provided between each coupling element (4a, 4b, 4c, 4d, 5a, 5b, 5c, 5d; 105a; 204a) and the at least one crankshaft (3a, 3b, 3c, 3d; 103a; 203a).

3. Wave power plant according to Patent Claim 2, wherein in each case at least one resistance element (4a, 4b, 4c, 4d) and at least one lift element (5a, 5b, 5c, 5d) are secured on the crankshaft (3a, 3b, 3c, 3d) by means of in each case two lever arms (6a, 6b, 6c, 6d, 8a, 8b, 8c, 8d) spaced apart along the crankshaft (3a, 3b, 3c, 3d).

4. Wave power plant according to Patent Claim 2 or 3, wherein a length of the lever arms (6a, 6b, 6c, 6d, 8a, 8b, 8c, 8d; 106a; 208a) is adjustable during the operation of the wave power plant.

5. Wave power plant according to one of the preceding patent claims, wherein a lift element is a wing profile (5a, 5b, 5c, 5d).

6. Wave power plant according to Patent Claim 5, wherein a geometry of the wing profile (5a, 5b, 5c, 5d) is adjustable.

7. Wave power plant according to one of Patent Claims 2 to 6, wherein an angle of incidence (a) between the lever arm (6a, 6b, 6c, 6d; 106a) and the lift element (5a, 5b, 5c, 5d; 105a) is adjustable during operation.

8. Wave energy plant according to one of Patent Claims 2 to 7, wherein an angle between lever arms (6a, 6b, 6c, 6d, 8a, 8b, 8c, 8d; 106a; 208a) is adjustable during the operation of the wave power plant.

9. Wave power plant according to one of the preceding patent claims, wherein a lift element is a surface element (105a), which has an angle of incidence (a) to the circulating orbital flow of the body of water.

10. Wave power plant according to one of the preceding patent claims, wherein a resistance element (4a, 4b, 4c, 4d; 204a) has the shape of a circular cylinder or an elliptical cylinder, and wherein the longitudinal axis thereof is arranged approximately parallel to the crankshaft (3a, 3b, 3c, 3d; 203a).

11. Wave power plant according to one of the preceding patent claims, having a surface-forming resistance element, wherein one surface is flat or convexly or concavely curved.

12. Wave power plant according to one of the preceding patent claims, wherein the resistance element (504a; 604a) has an adjustable flow resistance.

13. Wave power plant according to one of Patent Claims 2 to 12, wherein the resistance element (304a; 404a; 504a) is not rotationally symmetrical and is secured on the lever arm (208a) in such a way that the orientation thereof in a fixed reference coordinate system is maintained at all times.

14. Wave power plant according to Patent Claim 13, wherein the resistance element (304a; 404a; 504a) is coupled to the crankshaft by a gear or a belt drive.

15. Wave power plant according to one of Patent Claims 12 to 14, wherein the resistance element (504a; 604a) has at least one resistance body (502a; 602a) of variable volume, which can be adjusted in accordance with a rotational position of the crankshaft and of the current approach flow conditions, e.g. by allowing water in and out.

16. Wave power plant according to one of the preceding patent claims, wherein a damping or a phase angle (β) between the at least one lever arm of the resistance element and the circulating orbital flow is adjustable or controllable.

17. Wave power plant according to Patent Claim 16, wherein the damping is controlled in such a way that the phase angle (β) is between 75 and 105 degrees, in particular about 90 degrees.

18. Wave power plant according to Patent Claim 16 or 17, wherein an angle of incidence (α) between a rotatable resistance element (204a) that is not rotationally symmetrical and the associated lever arm (208a) can be detected, in accordance with which angle the damping and/or the phase angle (β) can be controlled.

19. Wave power plant according to one of Patent Claims 2 to 18, wherein a means for converting the torque into some other form of energy is a hydraulic pump or a gear with an electric generator, wherein the means for converting the torque can be driven by the crankshaft (3a, 3b, 3c, 3d; 103a; 203a).

20. Wave power plant according to Patent Claim 19, wherein the damping and/or the phase angle (β) is controlled by means of a backpressure acting at a working port of the hydraulic pump and/or by a torque at the generator.

21. Wave power plant according to one of Patent Claims 16 to 18, wherein the damping and/or the phase angle (β) is controlled by means of a pivotable or rotatable resistance surface or by means of a brake, in particular an eddy current brake.

22. Wave power plant according to one of Patent Claims 16 to 18, wherein the damping and/or the phase angle (β) is controlled by pitching and/or by changing the length of the lever arm (6a, 6b, 6c, 6d, 8a, 8b, 8c, 8d; 106a; 208a) and/or by adjusting the geometry of the wing profile (5a, 5b, 5c, 5d) and/or by changing the angle between the lever arm (6a, 6b, 6c, 6d; 106a) and the lift element (5a, 5b, 5c, 5d; 105a) and/or by changing the angle between the lever arms (6a, 6b, 6c, 6d, 8a, 8b, 8c, 8d; 106a; 208a).

23. Wave power plant according to one of the preceding patent claims, having a plurality of crankshafts (3a, 3b, 3c, 3d), which are arranged at approximately the same depth in the body of water and are supported jointly in an approximately frame-shaped support (10).

24. Wave power plant according to Patent Claim 23, wherein the support (10) extends over a plurality of wave peaks (1a) and/or over a plurality of wave troughs (1c).

25. Wave power plant according to one of the preceding patent claims, wherein pressure sensors and/or low-torque weathervane rotors and/or pairs of piezoelectric bending transducers or optical sensors, in particular having a laser, arranged at an angle to one another are provided in the body of water.

26. Wave power plant according to one of Patent Claims 23 to 25, wherein a horizontal and/or vertical damping plate is provided on the support (10).

## Revendications

1. Installation houlomotrice pour convertir de l'énergie d'un mouvement ondulatoire de l'eau, un écoulement orbital périphérique (7a, 7c) étant décrit par des particules d'eau sous la surface des vagues, l'énergie de l'écoulement orbital périphérique étant convertie au moins partiellement par le biais d'éléments d'accouplement (4a, 4b, 4c, 4d, 5a, 5b, 5c, 5d ; 105a ; 204a ; 304a ; 404a ; 504a ; 604a) en rotation d'au moins un arbre à manivelle (3a, 3b, 3c, 3d ; 103a ; 203a), **caractérisée en ce qu'**au moins deux éléments d'accouplement fondamentalement différents (4a, 4b, 4c, 4d, 5a, 5b, 5c, 5d ; 105a ; 204a ; 304a ; 404a ; 504a ; 604a) sont disposés sur l'au moins un arbre à manivelle (3a, 3b, 3c, 3d ; 103a ; 203a), parmi lesquels au moins un élément d'accouplement est un élément de résistance (4a, 4b, 4c, 4d ; 204a ; 304a ; 404a ; 504a ; 604a) et au moins un élément d'accouplement est un élément de portance (5a, 5b, 5c, 5d ; 105a) .

2. Installation houlomotrice selon la revendication 1, dans laquelle au moins un bras de levier (6a, 6b, 6c, 6d, 8a, 8b, 8c, 8d ; 106a ; 208a) est prévu entre chaque élément d'accouplement (4a, 4b, 4c, 4d, 5a, 5b, 5c, 5d ; 105a ; 204a) et l'au moins un arbre à manivelle (3a, 3b, 3c, 3d ; 103a ; 203a).

3. Installation houlomotrice selon la revendication 2, dans laquelle au moins un élément de résistance (4a, 4b, 4c, 4d) et au moins un élément de portance (5a, 5b, 5c, 5d) sont respectivement fixés à l'arbre à manivelle (3a, 3b, 3c, 3d) par le biais de deux bras de levier respectifs (6a, 6b, 6c, 6d, 8a, 8b, 8c, 8d) espacés le long de l'arbre à manivelle (3a, 3b, 3c, 3d).

4. Installation houlomotrice selon la revendication 2 ou 3, dans laquelle une longueur des bras de levier (6a, 6b, 6c, 6d, 8a, 8b, 8c, 8d ; 106a ; 208a) peut être ajustée lors du fonctionnement de l'installation houlomotrice.

5. Installation houlomotrice selon l'une quelconque des revendications précédentes, dans laquelle un élément de portance est un profil d'aile (5a, 5b, 5c, 5d).

6. Installation houlomotrice selon la revendication 5, dans laquelle une géométrie du profil d'aile (5a, 5b, 5c, 5d) peut être ajustée.

7. Installation houlomotrice selon l'une quelconque des revendications 2 à 6, dans laquelle un angle d'incidence (α) entre le bras de levier (6a, 6b, 6c, 6d ; 106a) et l'élément de portance (5a, 5b, 5c, 5d ; 105a) peut être ajusté lors du fonctionnement.

8. Installation houlomotrice selon l'une quelconque des revendications 2 à 7, dans laquelle un angle entre les bras de levier (6a, 6b, 6c, 6d, 8a, 8b, 8c, 8d ; 106a ; 208a) peut être ajusté lors du fonctionnement de l'installation houlomotrice.

9. Installation houlomotrice selon l'une quelconque des revendications précédentes, dans laquelle un élément de portance est un élément de surface (105a) qui présente un angle d'incidence (α) par rapport à l'écoulement orbital périphérique de l'eau.

10. Installation houlomotrice selon l'une quelconque des revendications précédentes, un élément de résistance (4a 4b, 4c, 4d ; 204a) présentant une forme circulaire cylindrique ou une forme elliptique cylindrique, et son axe longitudinal étant disposé approximativement parallèlement à l'arbre à manivelle (3a, 3b, 3c, 3d ; 203a).

11. Installation houlomotrice selon l'une quelconque des revendications précédentes, comprenant un élément de résistance plan, une surface étant plane ou courbée de manière convexe ou concave.

12. Installation houlomotrice selon l'une quelconque des revendications précédentes, dans laquelle l'élément de résistance (504a ; 604a) présente une résistance à l'écoulement ajustable.

13. Installation houlomotrice selon l'une quelconque des revendications 2 à 12, dans laquelle l'élément de résistance (304a ; 404a ; 504a) ne présente pas de symétrie de révolution et est fixé au bras de levier (208a) de telle sorte que son orientation soit constamment maintenue dans un système de coordonnées de référence fixe.

14. Installation houlomotrice selon la revendication 13, dans laquelle l'élément de résistance (304a ; 404a ; 504a) est accouplé à l'arbre à manivelle par le biais d'une transmission ou d'un entraînement par courroie.

15. Installation houlomotrice selon l'une quelconque des revendications 12 à 14, dans laquelle l'élément de résistance (504a ; 604a) a au moins un corps de résistance (502a ; 602a) de volume variable qui peut être ajusté en fonction d'une position en rotation de l'arbre à manivelle et des conditions d'écoulement en amont actuelles, par exemple en laissant entrer et sortir de l'eau.

16. Installation houlomotrice selon l'une quelconque des revendications précédentes, dans laquelle un amortissement ou un angle de phase (β) entre l'au moins un bras de levier de l'élément de résistance et l'écoulement orbital périphérique peut être ajusté ou régulé.

17. Installation houlomotrice selon la revendication 16, dans laquelle l'amortissement est régulé de telle sorte que l'angle de phase (β) vaille entre 75 et 105 degrés, en particulier approximativement 90 degrés.

18. Installation houlomotrice selon la revendication 16 ou 17, dans laquelle un angle d'incidence (α) entre un élément de résistance rotatif (204a) ne présentant pas de symétrie de révolution et le bras de levier associé (208a) peut être détecté, en fonction duquel l'amortissement et/ou l'angle de phase (β) peu(ven)t être régulé(s).

19. Installation houlomotrice selon l'une quelconque des revendications 2 à 18, dans laquelle un moyen de conversion du couple en une autre forme d'énergie est une pompe hydraulique ou une transmission pourvue d'un générateur électrique, dans laquelle le moyen de conversion du couple peut être entraîné par l'arbre à manivelle (3a, 3b, 3c, 3d ; 103a ; 203a).

20. Installation houlomotrice selon la revendication 19, dans laquelle l'amortissement et/ou l'angle de phase (β) est/sont régulé (s) par le biais d'une contre-pression agissant au niveau d'un raccord de travail de la pompe hydraulique et/ou au moyen d'un couple au niveau du générateur.

21. Installation houlomotrice selon l'une quelconque des revendications 16 à 18, dans laquelle l'amortissement et/ou l'angle de phase (β) est/sont régulé(s) par le biais d'une surface de résistance pivotante ou rotative ou par le biais d'un frein, en particulier d'un frein à courants de Foucault.

22. Installation houlomotrice selon l'une quelconque des revendications 16 à 18, dans laquelle l'amortissement et/ou l'angle de phase (β) est/sont régulé(s) par inclinaison et/ou par une modification de la longueur du bras de levier (6a, 6b, 6c, 6d, 8a, 8b, 8c, 8d ; 106a ; 208a) et/ou par un ajustement de la géométrie du profil d'aile (5a, 5b, 5c, 5d) et/ou par une modification de l'angle entre le bras de levier (6a, 6b, 6c, 6d ; 106a) et l'élément de portance (5a, 5b, 5c, 5d ; 105a) et/ou par une modification de l'angle entre les bras de levier (6a, 6b, 6c, 6d, 8a, 8b, 8c, 8d ; 106a ; 208a).

23. Installation houlomotrice selon l'une quelconque des revendications précédentes, comprenant plusieurs arbres à manivelle (3a, 3b, 3c, 3d) qui sont disposés à approximativement la même profondeur dans l'eau et sont montés ensemble dans un support (10) approximativement en forme de cadre.

24. Installation houlomotrice selon la revendication 23, dans laquelle le support (10) s'étend sur plusieurs crêtes de vague (1a) et/ou sur plusieurs creux de vague (1c).

25. Installation houlomotrice selon l'une quelconque des revendications précédentes, dans laquelle des capteurs de pression et/ou des rotors de girouette à faible couple et/ou des paires de transducteurs de flexion piézo-électriques ou de capteurs optiques, en particulier comprenant un laser, disposés de manière inclinée les uns par rapport aux autres, sont prévus dans l'eau.

26. Installation houlomotrice selon l'une quelconque des revendications 23 à 25, dans laquelle une plaque d'amortissement horizontale et/ou verticale est prévue sur le support (10).
